# EUROPEAN PATENT APPLICATION

(11) **EP 4 800 971 A1**
(43) Date of publication of application: **02.09.2026**
(21) Application number: 26160075.3
(22) Date of filing: 23.02.2026
(51) Int. Cl.: H04L 9/08

(54) **MANAGEMENT SYSTEM, VEHICLE MANAGER, DELETION MANAGEMENT METHOD, AND PROGRAM**

(30) Priority: 28.02.2025 JP 2025031972
(71) Applicant: TOYOTA JIDOSHA KABUSHIKI KAISHA, Toyota-shi, Aichi-ken, 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

A management system deletes a subject digital key to a vehicle 20 when a specified condition is satisfied. The subject digital key is one of multiple digital keys to the vehicle 20. The management system does not delete the subject digital key when a cancellation request for deletion of the subject digital key is issued, during a specified period, from a device to which a digital key different from the subject digital key is registered. The management system deletes the subject digital key when the cancellation request is not issued, during the specified period, from a device to which a digital key different from the subject digital key is registered.

## Description

### CROSS-REFERENCE TO RELATED APPLICATIONS

This application is based upon and claims the benefit of priority from Japanese Patent Application No. 2025-031972, filed on February 28, 2025, the entire contents of which are incorporated herein by reference.

### BACKGROUND

### 1. Field

The following description relates to a management system, a vehicle manager, a deletion management method, and a program.

### 2. Description of Related Art

JP2024-001720A describes a management system that manages multiple digital keys, each registered to a corresponding device.

This management system may delete a subject digital key from its corresponding device when a specified condition is satisfied. In such a management system, the subject digital key may not be deleted if a cancellation request for deletion of the subject digital key is issued.

When the cancellation request is issued from the device to which the subject digital key is registered, the subject digital key may be left undeleted unless the management system deletes the subject digital key in a different manner.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a management system (10) is configured to delete a subject digital key to a vehicle (20) when a specified condition (RC) is satisfied. The subject digital key is one of digital keys to the vehicle (20). The management system (10) is configured to not delete the subject digital key if a cancellation request (D51) for deletion of the subject digital key is issued, during a specified period (RP), from a device (30) to which a digital key different from the subject digital key is registered. The management system (10) is configured to delete the subject digital key if the cancellation request (D51) is not issued, during the specified period (RP), from a device (30) to which a digital key different from the subject digital key is registered.

In another general aspect, a vehicle manager (26) installed in a vehicle (20) is configured to delete a subject digital key to the vehicle (20) when a specified condition (RC) is satisfied. The subject digital key is one of digital keys enabled for the vehicle (20). The vehicle manager (26) is configured to not delete the subject digital key if a cancellation request (D51) for deletion of the subject digital key is issued, during a specified period (RP), from a device (30) to which a digital key different from the subject digital key is registered. The vehicle manager (26) is configured to delete the subject digital key if the cancellation request (D51) is not issued from the device (30) during the specified period.

In another general aspect, a deletion management method is for deleting a subject digital key to a vehicle (20) when a specified condition (RC) is satisfied. The method is performed by a management system (10) including a computer. The subject digital key is one of digital keys to the vehicle (20). The method includes maintaining the subject digital key, if a cancellation request (D51) for deletion of the subject digital key is issued, during a specified period (RP), from a device (30) to which a digital key different from the subject digital key is registered. The method further includes deleting the subject digital key, if the cancellation request (D51) is not issued from the device (30) during the specified period.

In another general aspect, a program (PV) is executable by a computer to delete a subject digital key to a vehicle (20) when a specified condition (RC) is satisfied. The subject digital key is one of digital keys to the vehicle (20). The program (PV) is configured to cause the computer to not delete the subject digital key, if a cancellation request (D51) for deletion of the subject digital key is issued, during a specified period (RP), from a device (30) to which a digital key different from the subject digital key is registered. The program (PV) is configured to cause the computer to delete the subject digital key, if the cancellation request (D51) is not issued, during the specified period (RP), from a device (30) to which a digital key different from the subject digital key is registered.

Other features and aspects will be apparent from the following detailed description, the drawings, and the claims.

### BRIEF DESCRIPTION OF THE DRAWINGS

Fig. 1 is a schematic diagram showing a management system in accordance with a first embodiment.
Fig. 2 is a schematic diagram showing owner key information of an owner device shown in Fig. 1.
Fig. 3 is a schematic diagram showing shareable key information of a shareable key shown in Fig. 1.
Fig. 4 is a schematic diagram showing a data block included in a database shown in Fig. 1.
Fig. 5 is a diagram illustrating a series of processes executed by the management system shown in Fig. 1 to register an owner key.
Fig. 6 is a diagram illustrating a series of processes executed by the management system shown in Fig. 1 to register a friend key.
Fig. 7 is a diagram illustrating a series of processes executed by the management system shown in Fig. 1 to register a guest key.
Fig. 8 is a diagram illustrating a series of processes executed by the management system shown in Fig. 1 to perform deletion management.
Fig. 9 is a flowchart illustrating a series of processes executed by a device shown in Fig. 1 to determine whether to transmit a cancellation request.
Fig. 10 is a flowchart illustrating details of processes executed by a vehicle manager shown in Fig. 1 to determine whether to accept a deletion request.
Fig. 11 is a flowchart illustrating a series of processes executed by a vehicle manager in accordance with a second embodiment to determine whether to permit transmission of a satisfaction notification.
Fig. 12 is a flowchart illustrating a series of processes executed by a management server in accordance with a third embodiment to determine whether to permit generation of a deletion request.
Fig. 13 is a diagram illustrating a series of processes executed by a management system in accordance with a fourth embodiment to perform deletion management.
Fig. 14 is a flowchart illustrating a series of processes executed by a vehicle manager in accordance with the fourth embodiment to determine whether to permit deletion of authentication information.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

A management system 10 in accordance with a first embodiment will now be described with reference to the drawings.

### Overview of Management System

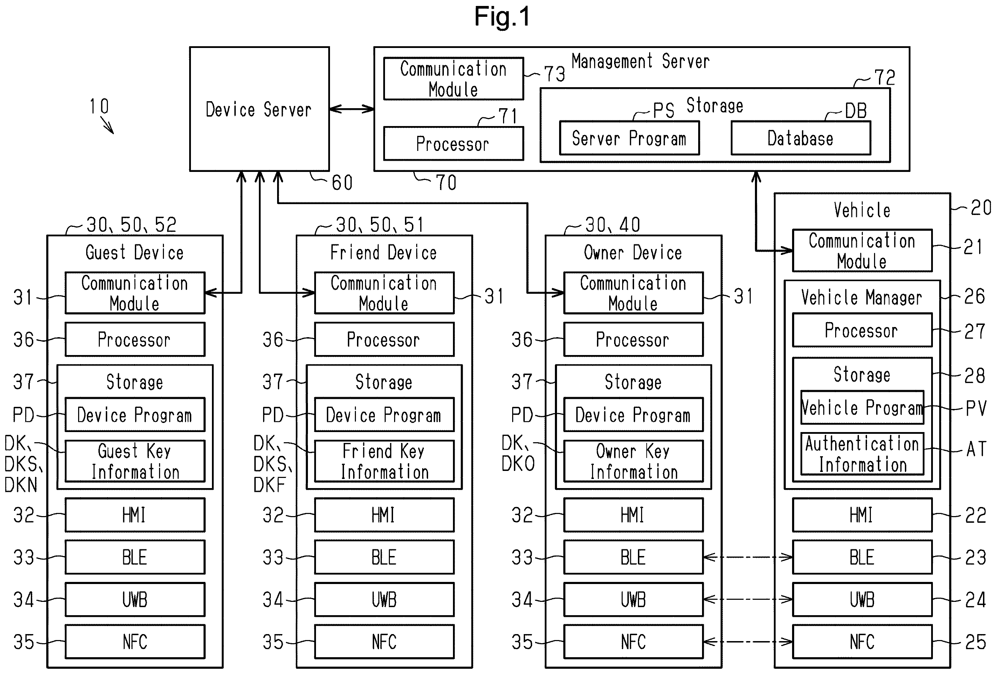

As shown in Fig. 1, a management system 10 is configured to manage multiple digital keys enabled for a vehicle 20. The Car Connectivity Consortium (CCC) has established the standards for digital keys. The digital key-related aspects of the present embodiment are compliant with the CCC standards, and are also applicable to other standards or systems that do not use the CCC standards. The management system 10 includes a vehicle 20, devices 30, a device server 60, and a management server 70.

The vehicle 20 includes a communication module 21, a human-machine interface (HMI) 22, a Bluetooth Low Energy (BLE) module 23, an ultra-wide band (UWB) module 24, a near-field communication (NFC) module 25, and a vehicle manager 26.

The communication module 21 is configured to perform communication with the management server 70 through a wireless communication line. The HMI 22 includes an input device and a presentation device. When the input device accepts an operation performed by a user of the vehicle 20, the input device inputs a signal indicating the operation to the vehicle 20. The presentation device is configured to present information to the user by images, sounds, or the like. The presentation device includes, for example, a monitor and a speaker.

The BLE module 23 is configured to perform short-range wireless communication with the device 30 through BLE communication. The UWB module 24 is configured to perform communication with the device 30 through UWB. The UWB module 24 is configured to measure a distance from the device 30 to the vehicle 20. The NFC module 25 is configured to perform short-range wireless communication with the device 30 through NFC.

The vehicle manager 26 is installed in the vehicle 20. The vehicle manager 26 is configured to manage digital keys of the vehicle 20. The vehicle manager 26 is, for example, a digital-key electronic control unit (ECU). The vehicle manager 26 includes a processor 27 and storage 28. The storage 28 stores a vehicle program PV, and authentication information AT related to each digital key. When the processor 27 runs the vehicle program PV, the vehicle program PV causes the processor 27 to store and/or delete the authentication information AT. When the authentication information AT is used to authenticate a digital key, the digital key becomes enabled to control the vehicle 20. The authentication information AT is provided for each digital key. The processor 27 is a central processing unit (CPU); that is, processing circuitry. When the processor 27 runs the vehicle program PV, the processor 27 executes processing related to storage and deletion of the authentication information AT.

When the vehicle manager 26 authenticates a digital key, the vehicle manager 26 enables the authenticated digital key to control the vehicle 20. In an example, when the vehicle manager 26 authenticates a digital key, the vehicle manager 26 enables the digital key to unlock the vehicle 20. In another example, when the vehicle manager 26 authenticates a digital key, the vehicle manager 26 enables the digital key to start the vehicle 20.

The device 30 may be a portable information terminal, such as a smartphone. The device 30 includes a communication module 31, an HMI 32, a BLE module 33, a UWB module 34, an NFC module 35, a processor 36, and storage 37.

The communication module 31 is configured to perform communication with the device server 60 through a wireless communication line. The HMI 32 includes an input device and a presentation device. The input device is configured to receive an operation by a user of the device 30. The presentation device is configured to present information to the user by images, sounds, or the like. The presentation device includes, for example, a monitor and a speaker.

The BLE module 33 is configured to perform short-range wireless communication with the vehicle 20 through BLE communication. The UWB module 34 is configured to perform communication with the vehicle 20 through UWB communication. The NFC module 35 is configured to perform short-range wireless communication with the vehicle 20 through NFC.

The storage 37 stores a device program PD, and key information DK related to a corresponding digital key. When the processor 36 runs the device program PD, the device program DP causes the processor 36 to store and/or delete the key information DK. The key information DK indicates a digital key. The processor 36 is a CPU; that is, processing circuitry.

The device program PD includes, for example, a device application and a digital key framework. The device application includes an application for storage and deletion of the key information DK. The digital key framework includes a program that provides the device 30 with a pairing functionality and a digital-key sharing functionality through an application program interface (API) prepared in an operating system (OS). When the processor 36 runs the device program PD, the processor 36 executes processing related to storage and deletion of the key information DK.

The devices 30 include an owner device 40 and shareable devices 50. The owner device 40 stores owner key information DKO as the key information DK. The owner key information DKO indicates an owner key KO. Only a single owner key KO is allowed to be registered to a single vehicle 20. Accordingly, there is only one owner key KO for each vehicle 20.

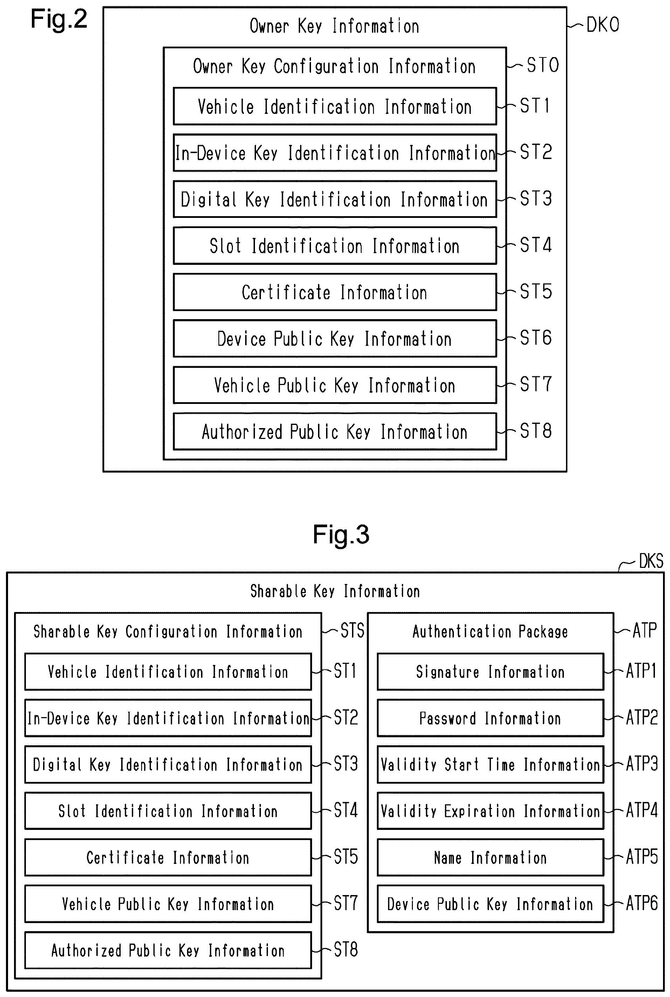

As shown in Fig. 2, the owner key information DKO includes owner key configuration information STO. The owner key configuration information STO includes vehicle identification information ST1, in-device key identification information ST2, digital key identification information ST3, and slot identification information ST4. The owner key configuration information STO further includes certificate information ST5, device public key information ST6, vehicle public key information ST7, and authorized public key information ST8.

The vehicle identification information ST1 includes information that identifies the vehicle 20, for which the digital key is enabled. The vehicle identification information ST1 includes, for example, identification information (ID) of the vehicle 20.

The in-device key identification information ST2 is used to manage the digital key on the device 30. The in-device key identification information ST2 includes information that allows the digital key to be identified by an application on the device 30.

The digital key identification information ST3 is used to manage the digital key on the management server 70. The slot identification information ST4 includes information that allows the digital key to be identified locally on the device 30.

The certificate information ST5 indicates a certificate of the digital key. The device public key information ST6 indicates a device public key PKD, which is a public key of the device 30. The device public key PKD in the owner key information DKO indicates a public key of the owner device 40. The vehicle public key information ST7 indicates a vehicle public key PKV, which is a public key of the vehicle 20. The authorized public key information ST8 indicates a vehicle public key PKV that has already been authorized.

As shown in Fig. 1, the shareable device 50 stores shareable key information DKS as the key information DK. The sharable key information KS indicates a shareable key KS. Multiple shareable keys KS are allowed to be registered to a single vehicle 20. Accordingly, there may be multiple shareable keys KS for each vehicle 20.

The shareable devices 50 include a friend device 51 and a guest device 52. The friend device 51 stores friend key information DKF as the shareable key information DKS. The friend key information DKF indicates a friend key KF. The guest device 52 stores guest key information DKN as the shareable key information DKS. The guest key information DKN indicates a guest key KN. Thus, the friend key KF and the guest key KN are different types of shareable keys KS. As will be described later, the friend key KF is a shareable key KS registered in response to a registration request D21 issued directly from the owner device 40. As will be described later, the guest key KN is a shareable key KS registered in response to a registration request D31 from a friend device 51. That is, the guest key KN is a shareable key KS registered in response to a registration request from a shareable device 50 that is not the owner device 40.

When a digital key is registered, the digital key is enabled. Specifically, in a state in which a digital key is registered, the authentication information AT is stored in the vehicle 20, and the key information DK is stored the device 30.

As shown in Fig. 3, the shareable key information DKS includes shareable key configuration information STS and an authentication package ATP. The shareable key configuration information STS includes the vehicle identification information ST1, the in-device key identification information ST2, the digital key identification information ST3, and the slot identification information ST4. The shareable key configuration information STS further includes the certificate information ST5, the vehicle public key information ST7, and the authorized public key information ST8. Accordingly, the shareable key configuration information STS is equivalent to the owner key configuration information STO without the device public key information ST6.

The authentication package ATP includes signature information ATP1, password information ATP2, validity start time information ATP3, validity expiration information ATP4, name information ATP5, and device public key information ATP6.

The signature information ATP1 indicates that the shareable device 50 is an authorized entity for sharing a digital key. In a case of the friend device 51, for example, the signature information ATP1 indicates a signature of the owner device 40. The owner signature information indicates that the owner device 40 has signed the device public key PKD of the friend device 51, which is indicated by the device public key information ATP6. In a case of the guest device 52, for example, the signature information ATP1 indicates a signature of a friend device 51. The friend signature information indicates that the friend device 51 has signed the device public key PKD of the guest device 52, which is indicated by the device public key information ATP6.

The password information ATP2 indicates a pairing password PAS used to establish a secure channel between the vehicle 20 and the owner device 40 during a pairing process. The validity start time information ATP3 indicates the earliest date and time at which the shareable key KS becomes valid for use. The validity expiration information ATP4 indicates the latest date and time until which the shareable key KS remains valid for use. The name information ATP5 indicates a name that identifies the shareable key KS. The name information ATP5 is, for example, an identifiable name set by the owner device 40 for each shareable device 50.

As shown in Fig. 1, the device server 60 is configured to relay communication between the device 30 and the management server 70. Although only one device server 60 is shown in Fig. 1, the device server 60 may be provided for each type of device 30. Specifically, the device server 60 used for communication with a first type of device 30 may differ from the device server 60 used for communication with a second type of device 30. In an example in which the type of device 30 includes the model of device 30, the device server 60 may be provided for each model of device 30. In another example in which the type of device 30 includes the communication line each device 30 uses, the device server 60 may be provided for each communication line used by the devices 30.

The device servers 60 each relay communication to the management server 70, so that different types of devices 30 can communicate with the management server 70 via the device servers 60.

### Management Server

The management server 70 is configured to manage the digital keys. The management server 70 is configured to perform communication with the vehicle 20 and the devices 30. The management server 70 includes a processor 71, storage 72, and a communication module 73. The processor 71 is a CPU; that is, processing circuitry. The communication module 73 is configured to perform communication with the device server 60 through a wireless communication line. The communication module 73 is configured to perform wireless communication with the communication module 21 of the vehicle 20.

The storage 72 stores a server program PS and a database DB. When the processor 71 runs the server program PS, the server program PS causes the processor 71 to register a digital key to the database DB and/or delete a digital key from the database DB.

In the database DB, each of the digital keys is associated with a corresponding vehicle 20 and a corresponding device 30 to which the digital key is registered. The database DB is divided into data blocks DA for each vehicle 20. In a state in which a digital key is registered, the management server 70 stores, in a corresponding data block DA, information indicating which device 30 has the key information DK of that digital key.

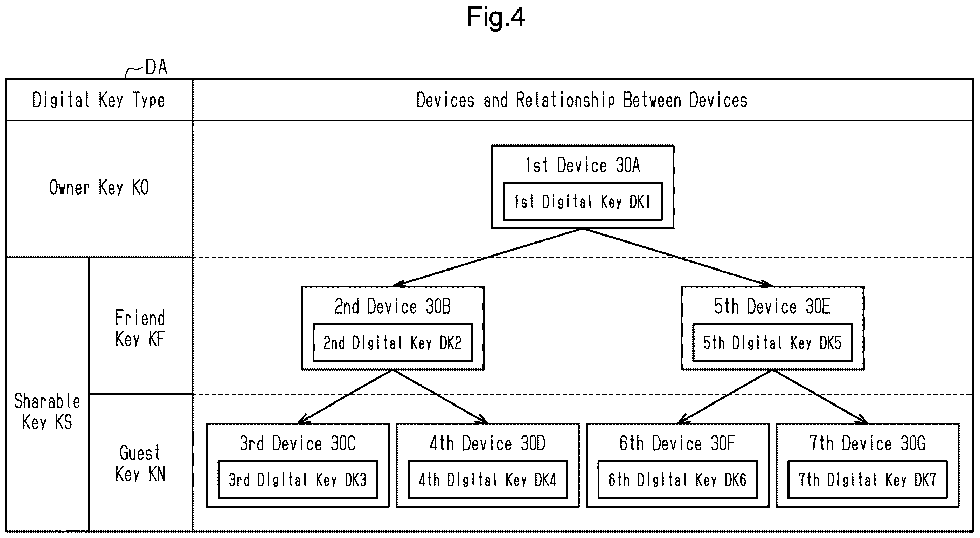

As shown in Fig. 4, the data block DA of the single vehicle 20 includes information indicating types of the digital keys registered to the vehicle 20, the registered devices 30, and the relationship between the registered devices 30. The type of digital key determines a priority level of that digital key. From highest to lowest in the hierarchy of priority, the owner key KO, the friend key KF, and the guest key KN are ranked in this order. A relatively high degree of authority is granted to a digital key having a relatively high priority level.

The authority granted to a digital key relates to, for example, the number of shareable keys KS that can be requested for registration based on the digital key, the scope of control over the vehicle 20 that can be enabled through authentication of the digital key, or the like. In an example, a greater number of shareable keys KS may be requested for registration by a digital key having a relatively high priority level. More specifically, for example, the number of friend keys KF that can be requested for registration by the owner device 40 is greater than the number of guest keys KN that can be requested for registration by the friend device 51.

In another example, a broader scope of control over the vehicle 20 may be permitted to a digital key having a relatively high priority level. The scope of control over the vehicle 20 includes, for example, a set of controllable functions, such as starting the engine of the vehicle 20, turning on the power of the vehicle 20, and unlocking and locking the doors of the vehicle 20. In an example in which the scope of control over the vehicle 20 includes all of the above three functions, the scope is broader than a case in which the scope of control over the vehicle 20 includes only unlocking and locking the doors of the vehicle 20. More specifically, the friend key KF has a scope of control over the vehicle 20 that includes all three functions described above, and the guest key KN has a scope of control over the vehicle 20 that is limited to only unlocking and locking the doors of the vehicle 20.

Hereinafter, an example in which seven digital keys are respectively registered to seven devices 30 with respect to the single vehicle 20 will be described. The seven devices 30 will be referred to as first to seventh devices 30A to 30G. The digital keys respectively registered to the first to seventh devices 30A to 30G will be referred to as first to seventh digital keys DK1 to DK7. Such correspondence is stored in the data block DA.

The owner key KO is registered to the first device 30A. In other words, the first device 30A is the owner device 40. That is, the first digital key DK1 is the owner key KO.

The shareable keys KS are respectively registered to the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50. That is, the second to seventh digital keys DK2 to DK7 are all shareable keys KS.

More specifically, the friend keys KF are respectively registered to the second device 30B and the fifth device 30E. In other words, the second device 30B and the fifth device 30E are the friend devices 51. The guest keys KN are respectively registered to the third device 30C, the fourth device 30D, the sixth device 30F, and the seventh device 30G. In other words, the third device 30C, the fourth device 30D, the sixth device 30F, and the seventh device 30G are the guest devices 52.

Hereinafter, the relationship between the registered devices 30 included in the data block DA will be described. The second device 30B and the first device 30A have a relationship in which the friend key KF is registered to the second device 30B in response to a registration request from the first device 30A. That is, the second digital key DK2 is registered based on the first digital key DK1. Accordingly, the first device 30A was involved in the registration of the second digital key DK2. On the other hand, the third device 30C to the seventh device 30G were not involved in the registration of the second digital key DK2.

The fifth device 30E and the first device 30A have a relationship in which the friend key KF is registered to the fifth device 30E in response to a registration request from the first device 30A. That is, the fifth digital key DK5 is registered based on the first digital key DK1. Accordingly, the first device 30A was involved in the registration of the fifth digital key DK5. On the other hand, the second device 30B to the fourth device 30D, the sixth device 30F, and the seventh device 30G were not involved in the registration of the fifth digital key DK5.

The third device 30C and the second device 30B have a relationship in which the guest key KN is registered to the third device 30C in response to a registration request from the second device 30B. That is, the third digital key DK3 is registered based on the second digital key DK2. Accordingly, the first device 30A and the second device 30B were involved in the registration of the third digital key DK3. On the other hand, the fourth device 30D to the seventh device 30G were not involved in the registration of the third digital key DK3.

The fourth device 30D and the second device 30B have a relationship in which the guest key KN is registered to the fourth device 30D in response to a registration request from the second device 30B. That is, the fourth digital key DK4 is registered based on the second digital key DK2. Accordingly, the first device 30A and the second device 30B were involved in the registration of the fourth digital key DK4. On the other hand, the third device 30C, and the fifth device 30E to the seventh device 30G were not involved in the registration of the fourth digital key DK4.

The sixth device 30F and the fifth device 30E have a relationship in which the guest key KN is registered to the sixth device 30F in response to a registration request from the fifth device 30E. That is, the sixth digital key DK6 is registered based on the fifth digital key DK5. Accordingly, the first device 30A and the fifth device 30E were involved in the registration of the sixth digital key DK6. On the other hand, the second device 30B to the fourth device 30D, and the seventh device 30G were not involved in the registration of the sixth digital key DK6.

The seventh device 30G and the fifth device 30E have a relationship in which the guest key KN is registered to the seventh device 30G in response to a registration request from the fifth device 30E. That is, the seventh digital key DK7 is registered based on the fifth digital key DK5. Accordingly, the first device 30A and the fifth device 30E were involved in the registration of the seventh digital key DK7. On the other hand, the second device 30B to the fourth device 30D, and the sixth device 30F were not involved in the registration of the sixth digital key DK6.

As described above, the data block DA includes information related to the registered devices 30. In the data block DA, the registered devices 30 are each associated with the device 30 that issued a registration request that initiated its registration. The data block DA also indicates which digital key each digital key is registered based on.

Each device 30 is configured to generate a deletion reservation request D41, which will be described later, for a digital key of which registration the device 30 was involved in. The deletion reservation request D41 requests that the digital key be deleted when a specified condition RC is satisfied.

In an example, the first device 30A was involved in the registration of the second to seventh digital keys DK2 to DK7. Therefore, the first device 30A is capable of generating the deletion reservation request D41 for each of the second digital key DK2 to the seventh digital key DK7. On the other hand, the first device 30A is not capable of generating the deletion reservation request D41 for the first digital key DK1.

The second device 30B was involved in the registration of the third digital key DK3 and the fourth digital key DK4. Therefore, the second device 30B is capable of generating the deletion reservation request D41 for the third digital key DK3 and the fourth digital key DK4. On the other hand, the second device 30B was not involved in the registration of the first digital key DK1, the second digital key DK2, and the fifth to seventh digital keys DK5 to DK7. Therefore, the second device 30B is not capable of generating the deletion reservation request D41 for any of the first digital key DK1, the second digital key DK2, and the fifth to seventh digital key DK5 to DK7.

### Registration of Digital Key

A series of processes executed by the management system 10 to register a digital key will now be described. The management system 10 may register the owner key KO, the friend key KF, or the guest key KN. The description hereafter will illustrate an overall process that shifts the state of a digital key from an unregistered state to a registered state. Hereinafter, the processing executed by the processor 27 will be described as the processing executed by the vehicle 20. The processing executed by the processor 36 will be described as the processing executed by the device 30. The processing executed by the processor 71 will be described as the processing executed by the management server 70.

### Registration of Owner Key

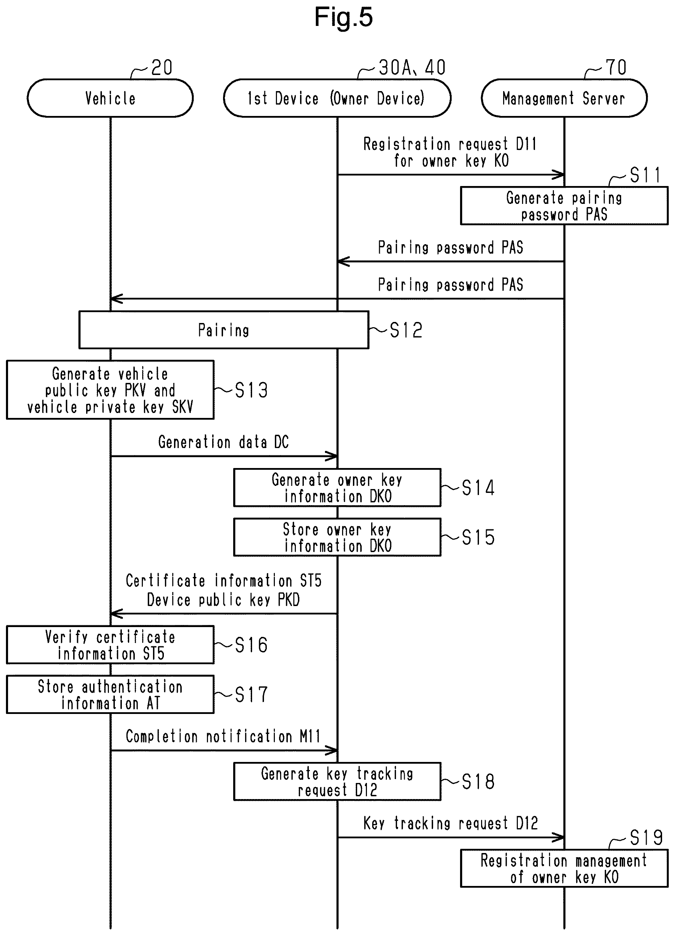

As illustrated in Fig. 5, the management system 10 executes a series of processes to register the owner key KO. In the example described hereafter, the owner key KO is registered to the first device 30A, which does not store the key information DK that indicates the owner key KO.

When the management system 10 registers the owner key KO, the management system 10 causes the first device 30A to store the key information DK that indicates the owner key KO. When the management system 10 registers the owner key KO, the management system 10 causes the vehicle 20 to store the key authentication information AT that authenticates the owner key KO. As a result, the first device 30A becomes the owner device 40. The present example assumes that necessary applications have been installed in the first device 30A prior to registration of the owner key KO.

When the management server 70 obtains a registration request D11 for the owner key KO from, for example, the first device 30A, the management server 70 performs step S11. In step S11, the management server 70 generates the pairing password PAS. Then, the management server 70 transmits information indicating the pairing password PAS to the vehicle 20 and the first device 30A.

The vehicle 20 receives the pairing password PAS. After receiving the pairing password PAS, the vehicle 20 is switched to a pairing mode through the HMI 22, and waits to receive the password from the first device 30A. Then, the vehicle 20 proceeds to step S12.

In step S12, the vehicle 20 performs a pairing process with the first device 30A. During the pairing process, the vehicle 20 establishes a secure channel for data transmission between the vehicle 20 and the first device 30A. The pairing process is performed using the pairing password PAS sent from the management server 70 to the vehicle 20 and the first device 30A. When the pairing process is successfully completed, the vehicle 20 proceeds to step S13.

In step S13, the vehicle 20 generates the vehicle public key PKV, which is a public key of the vehicle 20, and a vehicle private key SKV, which is a private key of the vehicle 20. Then, the vehicle 20 transmits generation data DC for generating the owner key KO through the secure channel to the first device 30A. The generation data DC includes the vehicle identification information ST1, and the vehicle public key information ST7 that indicates the vehicle public key PKV. When the first device 30A receives the generation data DC, the first device 30A proceeds to step S14.

In step S14, the first device 30A generates the owner key information DKO indicating the owner key KO. Then, the first device 30A proceeds to step S15.

In step S15, the first device 30A stores the owner key information DKO. As a result, the first device 30A becomes the owner device 40. Subsequently, the first device 30A transmits, to the vehicle 20, the certificate information ST5 related to the owner key KO, and the device public key information ST6 indicating the device public key PKD.

When the vehicle 20 receives the certificate information ST5 and the device public key information ST6, the vehicle 20 performs step S16. In step S16, the vehicle 20 verifies the certificate information ST5. When verification of the certificate information ST5 is successfully completed, the vehicle 20 proceeds to step S17.

In step S17, the vehicle 20 stores the device public key information ST6 indicating the device public key PKD, as the authentication information AT. Then, the vehicle 20 transmits, to the first device 30A, a completion notification M11 indicating that the authentication information AT has been stored.

When the first device 30A receives the completion notification M11, the first device 30A performs step S18. In step S18, the first device 30A generates a key tracking request D12 for the owner key KO. The key tracking request D12 is a signal that requests the management server 70 to update the database DB. Then, the first device 30A transmits the key tracking request D12 for the owner key KO via the device server 60 to the management server 70.

When the management server 70 receives the key tracking request D12, the management server 70 performs step S19. In step S19, the management server 70 registers the owner key KO. Specifically, the management server 70 stores, in the data block DA of the vehicle 20 in the database DB, that the owner key KO is registered to the first device 30A. This ends the series of processes executed by the management system 10 to register the owner key KO.

### Registration of Friend Key

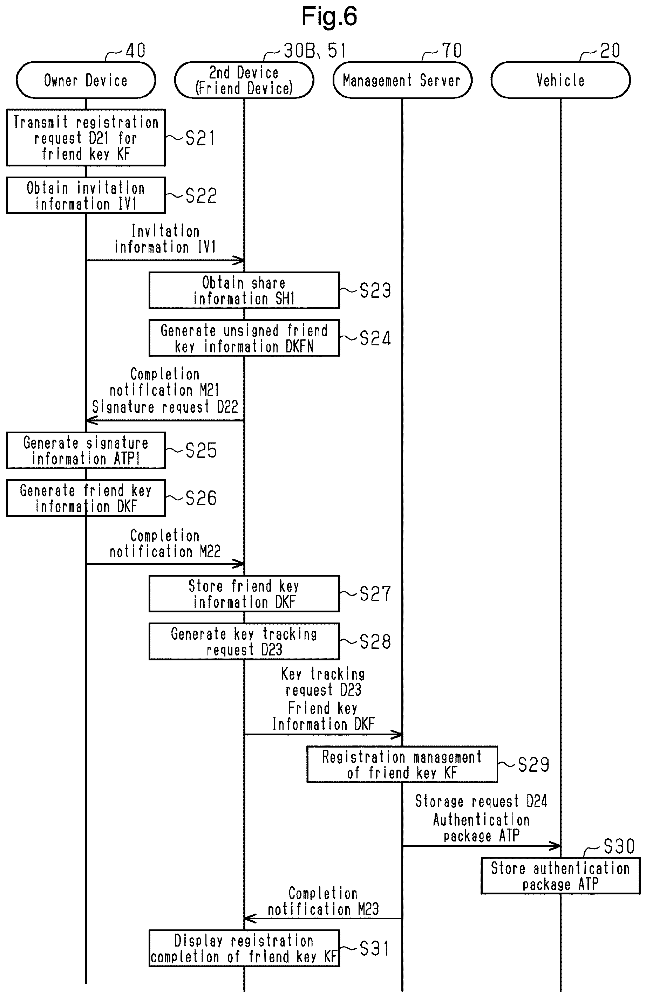

As illustrated in Fig. 6, the management system 10 executes a series of processes to register the friend key KF. In the example described hereafter, the friend key KF is registered to the second device 30B, which does not store the friend key information DKF.

When the owner device 40 receives an operation that requests registration of the friend key KF, the owner device 40 performs step S21. In step S21, the owner device 40 transmits the registration request D21 for the friend key KF to a relay server (not shown). Then, the owner device 40 proceeds to step S22.

In step S22, the owner device 40 obtains invitation information IV1 for sharing a digital key from the relay server. The invitation information IV1 includes, for example, a uniform resource locator (URL) link. Share information SH1 necessary for sharing the digital key can be obtained through the URL link. Then, the owner device 40 transmits the invitation information IV1 to the second device 30B.

When the second device 30B receives the invitation information IV1, the second device 30B performs step S23. In step S23, the second device 30B obtains the share information SH1 from the invitation information IV1. Specifically, the second device 30B downloads the share information SH1 through the URL link.

The share information SH1 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 have been set by the owner device 40. Subsequently, the second device 30B proceeds to step S24.

In step S24, the second device 30B generates unsigned friend key information DKFN using the share information SH1. The unsigned friend key information DKFN is the friend key information DKF without the signature information ATP1. Then, the second device 30B transmits, to the owner device 40, a completion notification M21 indicating that the generated unsigned friend key information DKFN has been uploaded through the URL link, and a signature request D22 that requests a signature.

The owner device 40 receives the completion notification M21 and the signature request D22 from the second device 30B. When the owner device 40 receives the completion notification M21, the owner device 40 obtains the unsigned friend key information DKFN. When the owner device 40 receives the signature request D22, the owner device 40 performs step S25 in response to an operation performed on the owner device 40.

In step S25, the owner device 40 generates the signature information ATP1. More specifically, the owner device 40 causes the HMI 32 to present the obtained unsigned friend key information DKFN, and accepts an operation indicating that the user of the owner device 40 has agreed to the registration of the friend key KF. In response to such an operation, the owner device 40 generates the signature information ATP1. Then, the owner device 40 proceeds to step S26.

In step S26, the owner device 40 adds the signature information ATP1 to the unsigned friend key information DKFN. That is, the owner device 40 generates the friend key information DKF. Then, the owner device 40 uploads the generated friend key information DKF through the URL link included in the invitation information IV1. The owner device 40 transmits, to the second device 30B, a completion notification M22 indicating that the generated friend key information DKF has been uploaded through the URL link.

When the second device 30B obtains the completion notification M22, the second device 30B performs step S27. In step S27, the second device 30B downloads and stores the friend key information DKF. As a result, the second device 30B becomes the friend device 51. Subsequently, the second device 30B proceeds to step S28.

In step S28, the second device 30B generates a key tracking request D23 for the friend key KF. Then, the second device 30B transmits the friend key information DKF and the key tracking request D23 for the friend key KF to the management server 70.

When the management server 70 receives the key tracking request D23 for the friend key KF, the management server 70 performs step S29. In step S29, the management server 70 registers the friend key KF.

Specifically, the management server 70 checks whether the friend key KF, which is the subject of the key tracking request D23, is included in a rejection list. The rejection list is a list of the shareable keys KS, including the friend keys KF and the guest keys KN, for which deletion requests have been received. When the subject friend key KF is included in the rejection list, the management server 70 transmits, to the second device 30B, a notification indicating that the key tracking request D23 cannot be accepted.

When the subject friend key KF of the received key tracking request D23 is not included in the rejection list, the management server 70 registers the subject friend key KF of the received key tracking request D23 to the database DB. More specifically, the management server 70 stores, in the data block DA of the vehicle 20 in the database DB, that the second device 30B is registered as the friend device 51. The management server 70 stores the relationship between the second device 30B and the owner device 40 with reference to the obtained friend key information DKF.

Then, the management server 70 transmits, to the vehicle 20, the authentication package ATP included in the friend key information DKF, and a storage request D24 that requests storage of the authentication package ATP. That is, the management server 70 transmits, to the vehicle 20, the device public key information ST6 indicating the device public key PKD of the friend device 51. Also, the management server 70 notifies the vehicle 20 that the device public key PKD has been signed by the owner device 40.

When the vehicle 20 receives the storage request D24 and the authentication package ATP from the management server 70, the vehicle 20 performs step S30. In step S30, the vehicle 20 stores the received authentication package ATP as the authentication information AT that authenticates the friend key KF.

After registering the friend key KF, the management server 70 transmits a completion notification M23 of the key tracking to the second device 30B.

When the second device 30B receives the completion notification M23 of the key tracking, the second device 30B performs step S31. In step S31, the second device 30B causes the HMI 32 to present information indicating that the friend key KF has been registered. For example, the second device 30B causes the HMI 32 to present an image indicating that the friend key KF has been registered. For example, the second device 30B causes the HMI 32 to display an image indicating that the friend key KF has been registered. This ends the series of processes executed by the management system 10 to register the friend key KF.

### Registration of Guest Key

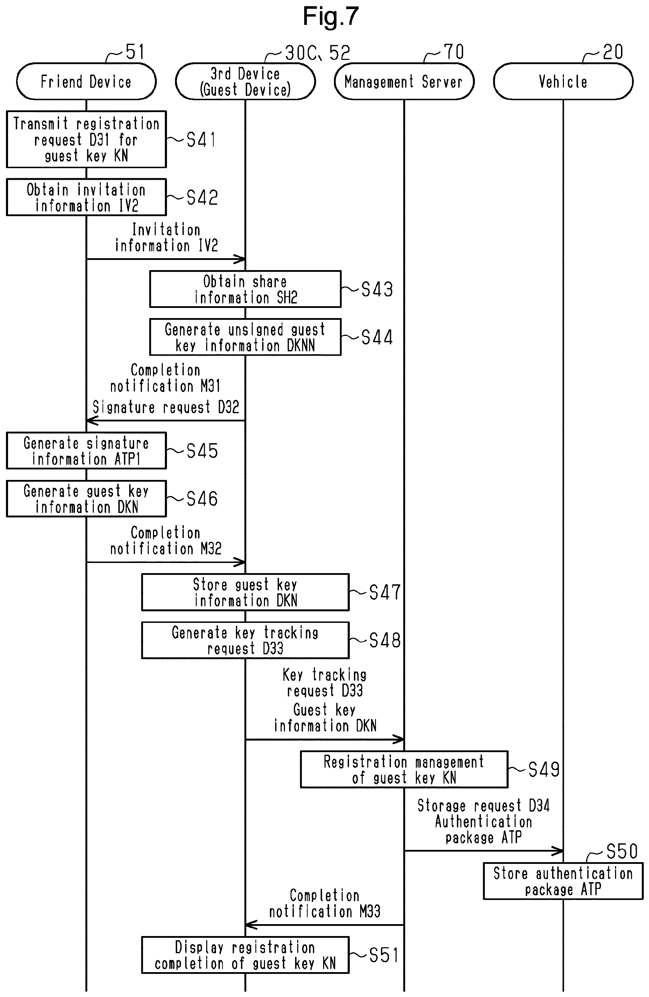

As illustrated in Fig. 7, the management system 10 executes a series of processes to register the guest key KN. In the example described hereafter, the guest key KF is registered to the third device 30C, which does not store the guest key information DKN.

When the friend device 51 receives an operation that requests registration of the guest key KN, the friend device 51 performs step S41. In step S41, the friend device 51 transmits the registration request D31 for the guest key KN to a relay server (not shown). Then, the friend device 51 proceeds to step S42.

In step S42, the friend device 51 obtains invitation information IV2 for sharing a digital key from the relay server. The invitation information IV2 includes, for example, a URL link. Share information SH2 necessary for sharing the digital key can be obtained through the URL link. Then, the friend device 51 transmits the invitation information IV2 to the third device 30C.

When the third device 30C receives the invitation information IV2, the third device 30C performs step S43. In step S43, the third device 30C obtains the share information SH2 from the invitation information IV2. Specifically, the second device 30B downloads the share information SH2 through the URL link.

The share information SH2 includes, for example, the shareable key configuration information STS, the password information ATP2, the validity start time information ATP3, the validity expiration information ATP4, and the name information ATP5. The validity start time information ATP3, the validity expiration information ATP4, and the name information ATP5 have been set by the friend device 51. Then, the third device 30C proceeds to step S44.

In step S44, the third device 30C generates unsigned guest key information DKNN using the share information SH2. The unsigned guest key information DKNN is the guest key information DKN without the signature information ATP1. Then, the third device 30C transmits, to the friend device 51, a completion notification M31 indicating that the generated unsigned guest key information DKNN has been uploaded through the URL link, and a signature request D32 that requests a signature.

The friend device 51 receives the completion notification M31 and the signature request D32 from the third device 30C. When the friend device 51 receives the completion notification M31, the friend device 51 obtains the unsigned guest key information DKNN. When the friend device 51 receives the signature request D32, the friend device 51 performs step S45 in response to an operation performed on the friend device 51.

In step S45, the friend device 51 generates the signature information ATP1. More specifically, the friend device 51 causes the HMI 32 to present the obtained unsigned guest key information DKNN, and accepts an operation indicating that the user of the friend device 51 has agreed to the registration of the guest key KN. In response to such an operation, the friend device 51 generates the signature information ATP1. Then, the friend device 51 proceeds to step S46.

In step S46, the friend device 51 adds the signature information ATP1 to the unsigned guest key information DKNN. That is, the friend device 51 generates the guest key information DKN. Then, the friend device 51 uploads the generated guest key information DKN through the URL link included in the invitation information IV2. The friend device 51 transmits, to the third device 30C, a completion notification M32 indicating that the generated guest key information DKN has been uploaded through the URL link.

When the third device 30C obtains the completion notification M32, the third device 30C performs step S47. In step S47, the third device 30C downloads and stores the guest key information DKN. As a result, the third device 30C becomes the guest device 52. Subsequently, the third device 30C proceeds to step S48.

In step S48, the third device 30C generates a key tracking request D33 for the guest key KN. Then, the third device 30C transmits the guest key information DKN and the key tracking request D33 for the guest key KN to the management server 70.

When the management server 70 receives the key tracking request D33 for the guest key KN, the management server 70 performs step S49. In step S49, the management server 70 registers the guest key KN.

Specifically, the management server 70 checks whether the guest key KN, which is the subject of the key tracking request D33, is included in the rejection list. When the guest key KN is included in the rejection list, the management server 70 transmits, to the third device 30C, a notification indicting that the key tracking request D33 cannot be accepted.

When the guest key KN is not included in the rejection list, the management server 70 registers the subject guest key KN of the key tracking request D33 to the database DB. More specifically, the management server 70 stores, in the data block DA of the vehicle 20 in the database DB, that the third device 30C is registered as the guest device 52. The management server 70 stores the relationship between the third device 30C and the friend device 51 with reference to the obtained guest key information DKN. Specifically, the management server 70 stores that the third device 30C has the guest key KN that was registered in response to the registration request D31 from the second device 30B.

Then, the management server 70 transmits, to the vehicle 20, the authentication package ATP included in the guest key information DKN, and a storage request D34 that requests storage of the authentication package ATP. That is, the management server 70 transmits, to the vehicle 20, the device public key information ST6 indicating the device public key PKD of the guest device 52. Also, the management server 70 notifies the vehicle 20 that the device public key PKD has been signed by the friend device 51.

When the vehicle 20 receives the authentication package ATP and the storage request D34, the vehicle 20 performs step S50. In step S50, the vehicle 20 stores the received authentication package ATP. The authentication package ATP includes the authentication information AT that authenticates the guest key KN.

After registering the guest key KN, the management server 70 transmits a completion notification M33 of the key tracking to the second device 30B.

When the second device 30B receives the completion notification M33 of the key tracking, the second device 30B performs step S51. In step S51, the third device 30C causes the HMI 32 to present information indicating that the guest key KN has been registered. For example, the third device 30C causes the HMI 32 to display an image indicating that the guest key KN has been registered. This ends the series of processes executed by the management system 10 to register the guest key KN.

### Deletion Management

Deletion management performed by the management system 10 to delete a subject digital key will now be described.

In the present embodiment, the subject digital key is the third digital key DK3 of the guest key KN. Accordingly, the third digital key DK3 is deleted by the series of processes related to deletion management, which is described below.

The description hereafter will illustrate an overall process that shifts the state of the third digital key DK3 from a registered state to an unregistered state. Hereafter, the processing executed by the processor 27 will be described as the processing executed by the vehicle 20. The processing executed by the processor 36 will be described as the processing executed by the device 30. The processing executed by the processor 71 will be described as the processing executed by the management server 70.

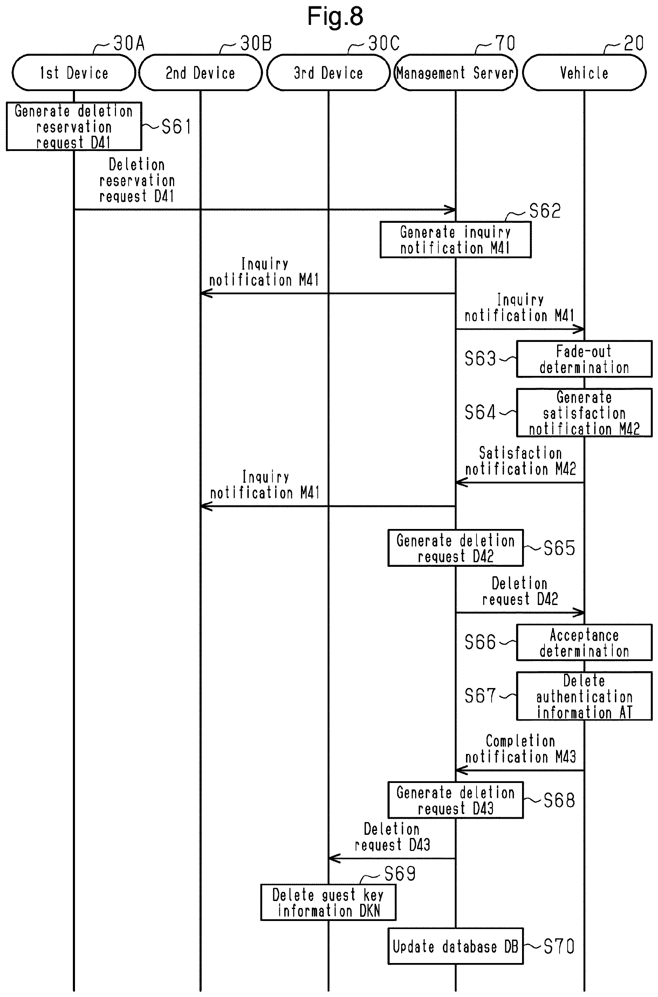

As illustrated in Fig. 8, the management system 10 executes a series of processes to delete the third digital key DK3 in response to the deletion reservation request D41 from the first device 30A.

When the first device 30A receives an operation that requests deletion of the third digital key DK3, the first device 30A performs step S61. In step S61, the first device 30A generates the deletion reservation request D41 for the third digital key DK3. The deletion reservation request D41 requests that the subject digital key be deleted when the specified condition RC is satisfied.

The deletion reservation request D41 includes a signal requesting deletion of the third digital key DK3, the digital key identification information ST3 indicating the third digital key DK3, and information indicating the specified condition RC. The specified condition RC is a condition for deleting the subject digital key after the deletion reservation request D41 is received. The specified condition RC is determined in advance. The specified condition RC includes that the vehicle 20 authenticates at least one of the digital keys to the vehicle 20 that is different from the third digital key DK3, which is the subject digital key. Then, the first device 30A transmits the deletion reservation request D41 for the third digital key DK3 to the management server 70.

When the management server 70 receives the deletion reservation request D41 for the third digital key DK3, the management server 70 performs step S62. In step S62, the management server 70 generates an inquiry notification M41 that inquires whether a cancellation request D51 is to be issued. The cancellation request D51 requests that deletion of the subject digital key in accordance with the deletion reservation request D41 be cancelled.

Subsequently, the management server 70 transmits the inquiry notification M41 to the second device 30B. The second device 30B was involved in the registration of the third device 30C, and differs from the first device 30A that transmitted the deletion reservation request D41. Then, the management server 70 transmits the deletion reservation request D41 to the vehicle 20.

When the vehicle 20 receives the deletion reservation request D41, the vehicle 20 performs step S63. In step S63, the vehicle 20 repeatedly performs a fade-out determination until the vehicle 20 determines that the specified condition RC is satisfied. The vehicle 20 repeatedly performs the fade-out determination to determine whether the specified condition RC is satisfied. Specifically, the vehicle 20 determines that the specified condition RC is satisfied when the vehicle 20 authenticates at least one of the digital keys to the vehicle 20 that is different from the subject digital key. When the vehicle 20 determines that the specified condition RC is satisfied, the vehicle 20 proceeds to step S64.

In step S64, the vehicle 20 generates a satisfaction notification M42 indicating that the specified condition RC has been satisfied. Then, the vehicle 20 transmits the satisfaction notification M42 to the management server 70.

When the management server 70 receives the satisfaction notification M42, the management server 70 again transmits the inquiry notification M41 to the second device 30B. Then, the management server 70 performs step S65. In step S65, the management server 70 generates a deletion request D42 for the authentication information AT of the subject digital key. The management server 70 transmits the generated deletion request D42 to the vehicle 20.

When the vehicle 20 receives the deletion request D42, the vehicle 20 performs step S66. In step S66, the vehicle 20 determines whether to accept the deletion request D42. Details of the acceptance determination of the deletion request D42 will be described later. When the vehicle 20 determines whether to accept the deletion request D42 and accepts the deletion request D42, the vehicle 20 proceeds to step S67.

In step S67, the vehicle 20 deletes the authentication information AT of the third digital key DK3 in accordance with the deletion request D42. As a result, the management system 10 deletes the third digital key DK3. Subsequently, the vehicle 20 transmits, to the management server 70, a completion notification M43 indicating that the authentication information AT has been deleted in accordance with the deletion request D42.

When the management server 70 receives the completion notification M43, the management server 70 performs step S68. In step S68, the management server 70 generates a deletion request D43 for the key information DK of the subject digital key. Specifically, the deletion request D43 requests deletion of the key information DK indicating the third digital key DK3, which is the subject digital key. The management server 70 transmits the generated deletion request D43 to the third device 30C.

When the third device 30C receives the deletion request D43, the third device 30C performs step S69. In step S69, the third device 30C deletes, in accordance with the deletion request D43, the key information DK that was registered based on the subject digital key. Specifically, the third device 30C deletes the key information DK indicating the third digital key DK3. In the present embodiment, the key information DK indicating the third digital key DK3 is the guest key information DKN.

After the management server 70 transmits the deletion request D43, the management server 70 proceeds to step S70. In step S70, the management server 70 updates the database DB. Specifically, the management server 70 deletes the third device 30C from the data block DA of the vehicle 20 in the database DB. Then, the management system 10 ends this deletion management.

### Cancellation Request

The cancellation request D51 transmitted by the device 30 that received the inquiry notification M41 will now be described.

When the device 30 receives the inquiry notification M41 transmitted from the management server 70, the device 30 executes a series of processes to determine whether to transmit the cancellation request D51. In the present embodiment, among the multiple devices 30, the second device 30B receives the inquiry notification M41. Accordingly, the second device 30B executes the series of processes to determine whether to transmit the cancellation request D51.

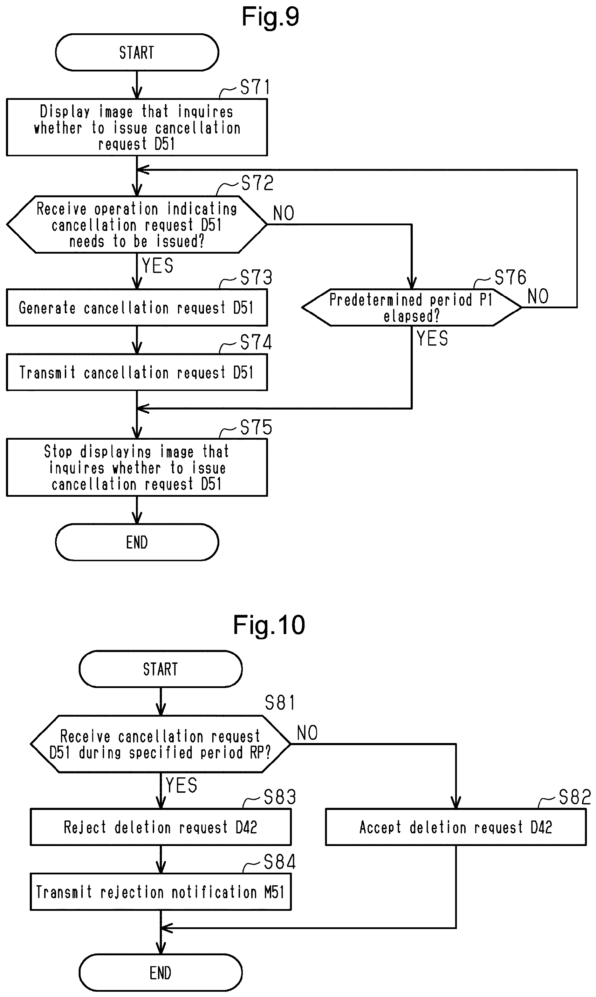

As illustrated in Fig. 9, when the processor 36 receives the inquiry notification M41, the processor 36 performs step S71. In step S71, the processor 36 causes the presentation device of the HMI 32 to display an image that inquires of the user whether to issue the cancellation request D51. The image includes, for example, an icon indicating that the cancellation request D51 needs to be issued. Then, the processor 36 proceeds to step S72.

In step S72, the processor 36 determines whether the input device of the HMI 32 receives an operation indicating that the user of the second device 30B has agreed to the issuance of the cancellation request D51. For example, the user may touch the icon indicating that cancellation request D51 needs to be issued.

When the input device of the HMI 32 receives the operation indicating that the cancellation request D51 needs to be issued (S72: YES), the processor 36 proceeds to step S73. In step S73, the processor 36 generates the cancellation request D51. Then, the processor 36 proceeds to step S74.

In step S74, the processor 36 transmits the cancellation request D51 to the management server 70. When the management server 70 receives the cancellation request D51, the management server 70 transmits the cancellation request D51 to the vehicle 20. Then, the processor 36 proceeds to step S75.

In step S75, the processor 36 stops displaying the image that inquires of the user whether to issue the cancellation request D51. Then, the processor 36 ends this series of processes to determine whether to transmit the cancellation request D51.

When the input device of the HMI 32 does not receive the operation indicating that the cancellation request D51 needs to be issued (S72: NO), the processor 36 proceeds to step S76.

In step S76, the processor 36 determines whether a predetermined period P1 has elapsed from when the inquiry notification M41 was received. When the predetermined period P1 has not elapsed (S76: NO), the processor 36 returns to step S72.

When the predetermined period P1 elapses (S76: YES), the processor 36 proceeds to step S75. In this manner, in a case in which an affirmative determination is given in step S76 and then step S75 is performed, the device 30 does not transmit the cancellation request D51 to the management server 70.

In the present embodiment, the cancellation request D51 can only be transmitted by the device 30 that received the inquiry notification M41. In other words, the management server 70 sends the inquiry notification M41 to only the second device 30B, so as to limit the device 30 that may issue the cancellation request D51 to the second device 30B.

### Determination of Whether to Accept Deletion Request

The determination of whether to accept the deletion request D43, executed by the vehicle manager 26, will now be described in detail.

As illustrated in Fig. 10, the processor 27 starts the acceptance determination beginning from step S81. In step S81, the processor 27 determines whether the vehicle 20 received the cancellation request D51 from the second device 30B during the specified period RP. The specified period RP includes a combined total of a period from when the vehicle 20 receives the deletion reservation request D41 to when the vehicle 20 receives the deletion request D42 and a period from when the specified condition RC is satisfied to when the predetermined period P1 elapses.

Specifically, when the specified condition RC is satisfied, the processor 27 first waits until the predetermined period P1 elapses. Next, the processor 27 determines whether the vehicle 20 received the cancellation request D51 during the specified period RP. When the vehicle 20 received the cancellation request D51, the processor 27 determines whether the cancellation request D51 was transmitted by the second device 30B.

The second device 30B is different from the third device 30C, to which the third digital key DK3 (subject digital key) is registered. The second device 30B was involved in the registration of the third digital key DK3 (subject digital key). The second device 30B is different from the first device 30A that issued the deletion reservation request D41.

When the processor 27 determines that the vehicle 20 did not receive the cancellation request D51 from the second device 30B during the specified period RP (S81: NO), the processor 27 proceeds to step S82. In step S82, the processor 27 determines to accept the deletion request D42. Accordingly, the processor 27 determines to delete the subject digital key. Then, the processor 27 ends this determination of whether to accept the deletion request D42.

Subsequently, the management system 10 continues the deletion management illustrated in Fig. 8 beginning from step S67 to delete the subject digital key. In other words, the processor 27 accepts the deletion request D42, so that the processor 27 deletes the authentication information AT of the subject digital key.

In contrast, as shown in Fig. 10, when the processor 27 determines that the vehicle 20 received the cancellation request D51 from the second device 30B during the specified period RP (S81: YES), the processor 27 proceeds to step S83. In step S83, the processor 27 rejects the deletion request D42.

In this case, the processor 27 does not perform step S67 shown in Fig. 8. Accordingly, the processor 27 does not delete the authentication information AT of the subject digital key. In other words, the processor 27 rejects the deletion request D42, so that the management system 10 does not delete the subject digital key.

After rejecting the deletion request D42, the processor 27 proceeds to step S84. In step S84, the processor 27 transmits a rejection notification M51 to the first device 30A that transmitted the deletion reservation request D41. Then, the processor 27 ends this determination of whether to accept the deletion request D42.

In this manner, the management system 10 performs the deletion management using multiple computers, so that the subject digital key is deleted when the specified condition RC is satisfied. The computers include the processors 36, 71, and 27. That is, the management system 10 performs the deletion management illustrated in Fig. 8, so as to execute a deletion management method configured to delete the subject digital key when the specified condition RC is satisfied.

### Operation of the First Embodiment

The management system 10 deletes the subject digital key when the vehicle manager 26 accepts the deletion request D42 during the deletion management illustrated in Fig. 8. In this manner, the management system 10 deletes the subject digital key when the specified condition RC is satisfied.

In contrast, the vehicle manager 26 does not delete the authentication information AT when the vehicle manager 26 rejects the deletion request D42 in step S83 of the determination of whether to accept the deletion request D42, shown in Fig. 10. In this case, the management system 10 does not delete the subject digital key even if the specified condition RC is satisfied.

When the vehicle manager 26 rejects the deletion request D42 in step S83 of the acceptance determination of the deletion request D42, the management server 70 does not receive the completion notification M43 shown in Fig. 8. Accordingly, the management server 70 does not transmit, to the second device 30B, the deletion request D43 that requests deletion of the key information DK indicating the subject digital key.

As a result, the management system 10 does not delete the key information DK indicating the subject digital key. Since the authentication information AT and the key information DK are both undeleted, the subject digital key remains enabled (registered).

### Advantages of the First Embodiment

(1-1) The management system 10 is configured to delete the subject digital key if the cancellation request D51 is not issued, during the specified period RP, from the device 30 to which a digital key different from the subject digital key is registered. In contrast, the management system 10 is configured to not delete the subject digital key if the cancellation request D51 is issued, during the specified period RP, from the device 30 to which a digital key different from the subject digital key is registered. Thus, the management system 10 avoids a situation in which the subject digital key is left undeleted due to an operation performed on the device 30 to which the subject digital key is registered.

(1-2) The second digital key DK2 that is different from the third digital key DK3 is registered to the second device 30B. Further, the second device 30B was involved in the registration of the third digital key DK3. Thus, the management system 10 is configured to not delete the subject digital key if the cancellation request D51 is issued from the device 30 to which a digital key different from the subject digital key is registered, and the device 30 was involved in the registration of subject digital key.

In contrast, the management system 10 is configured to delete the subject digital key even when the cancellation request D51 is issued from the device 30 that is different from the third device 30C, if the device 30 was not involved in the registration of the third digital key DK3. Specifically, the management system 10 deletes the subject digital key if any one of the fourth device 30D to the seventh device 30G issues the cancellation request D51. The users of the fourth device 30D to the seventh device 30G are not likely to have any knowledge of how the third digital key DK3 was registered, and the third digital key DK3 will not be left undeleted due to these users.

(1-3) The second device 30B is different from the first device 30A that transmitted the deletion reservation request D41. Therefore, the management system 10 is configured to not delete the subject digital key if the cancellation request D51 is issued from the device 30 to which a digital key different from the subject digital key is registered, and the device 30 did not transmit the deletion reservation request D41.

In this manner, the management system 10 ensures that the subject digital key remains undeleted when the cancellation request D51 is issued from the device 30 that belongs to the user who did not transmit the deletion reservation request D41.

(1-4) The deletion reservation request D41 may be transmitted from the first device 30A or the second device 30B that were involved in the registration of the third digital key DK3. That is, if the deletion reservation request D41 is issued from the device 30 that was involved in the registration of the subject digital key, the management system 10 is configured to delete the subject digital key when the specified condition RC is satisfied. Therefore, the management system 10 performs deletion management in response to only the deletion reservation request D41 issued from the first device 30A or the second device 30B, which are highly likely to have information of how the subject digital key was registered. The users of the fourth device 30D to the seventh device 30G are not likely to have any knowledge of how the third digital key DK3 was registered, and the third digital key DK3 will not be deleted by these users.

(1-5) When the management server 70 receives the deletion reservation request D41, the management server 70 transmits the inquiry notification M41 to the second device 30B. This allows the user of the second device 30B to recognize that the third digital key DK3 is to be deleted when the specified condition RC is satisfied.

(1-6) When the specified condition RC is satisfied, the management server 70 transmits the inquiry notification M41 to the second device 30B. This allows the user of the second device 30B to recognize that the third digital key DK3 is to be deleted when the predetermined period P1 elapses.

(1-7) In a case in which the vehicle 20 is used as a rental car or a shared car, the user of the vehicle 20 may switch, for example, from the user of the second device 30B to the user of the fifth device 30E. The specified condition RC includes that the vehicle 20 authenticates a digital key that is different from the subject digital key.

Accordingly, the subject digital key will be deleted when a new digital key is authenticated. Specifically, the second digital key DK2 to the fourth digital key DK4 are deleted when the vehicle 20 authenticates any of the fifth digital key DK5 to the seventh digital key DK7. In this manner, the management system 10 can delete the subject digital key in accordance with the switching of the users.

(1-8) The specified period RP includes a period from when the management server 70 receives the deletion reservation request D41 to when the specified condition RC is satisfied. Accordingly, the management system 10 is configured to not delete the subject digital key if the cancellation request D51 is issued during the period from when the management server 70 receives the deletion reservation request D41 to when the specified condition RC is satisfied. Therefore, the subject digital key remains undeleted when the user of the second device 30B operates the second device 30B after recognizing that the deletion reservation request D41 was issued.

(1-9) The vehicle manager 26 is configured to accept the deletion request D42 when the cancellation request D51 is not issued, during the specified period RP, from the device 30 to which a digital key different from the subject digital key is registered. As a result, the vehicle manager 26 deletes the authentication information AT of the subject digital key.

In contrast, the vehicle manager 26 is configured to reject the deletion request D42 when the cancellation request D51 is issued, during the specified period RP, from the device 30 to which a digital key different from the subject digital key is registered, so that the authentication information AT of the subject digital key remains undeleted. As a result, the authentication information AT of the digital key that was registered based on the subject digital key remains undeleted.

In this manner, when the vehicle manager 26 rejects the deletion request D42, the management system 10 suspends deletion of the subject digital key even if the specified condition RC is satisfied.

(1-10) When the vehicle manager 26 rejects the deletion request D42, the vehicle manager 26 is configured to transmit the rejection notification M51 to the first device 30A that transmitted the deletion reservation request D41. This allows the user of the first device 30A to recognize that deletion of the subject digital key has been rejected after the user operated the first device 30A to transmit the deletion reservation request D41.

### Second Embodiment

A management system 10 in accordance with a second embodiment will now be described with reference to the drawings. The second embodiment mainly differs from the first embodiment in that the vehicle 20 does not determine whether to accept the deletion request D42, and the vehicle 20 determines whether to permit transmission of the satisfaction notification M42. The description hereafter will focus on the differences from the first embodiment, and the same aspects will not be described in detail.

### Determination of Whether to Permit Transmission of Satisfaction Notification

The processor 27 determines whether to permit transmission of the satisfaction notification M42, after the vehicle manager 26 generates the satisfaction notification M42 in step S64 of the deletion management and before the vehicle manager 26 transmits the satisfaction notification M42 to the management server 70.

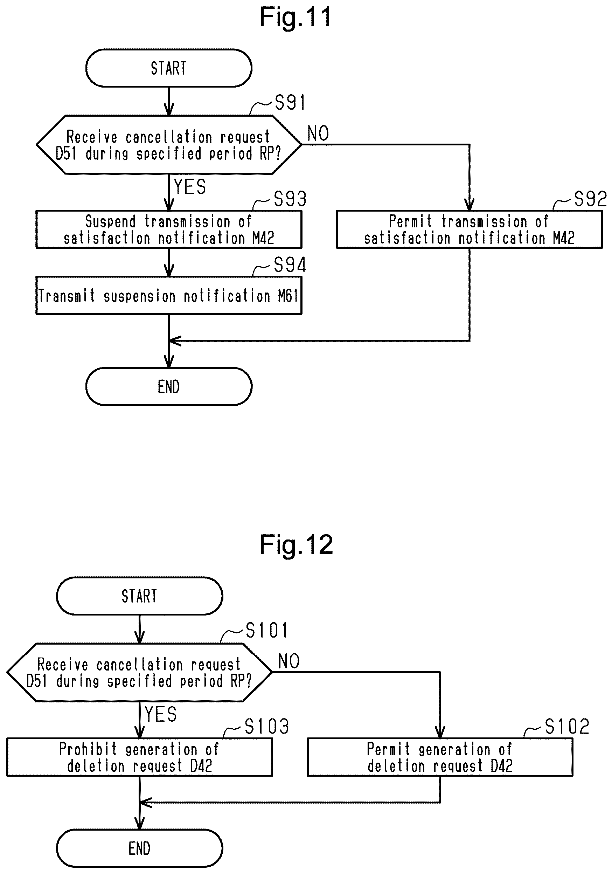

As shown in Fig. 11, the processor 27 starts the determination of whether to permit transmission of the satisfaction notification M42 beginning from step S91. In step S91, the processor 27 determines whether the vehicle 20 received the cancellation request D51 during the specified period RP. Step S91 is the same as step S81, and thus will not be described in detail.

When the processor 27 determines that the vehicle 20 did not receive the cancellation request D51 from the second device 30B during the specified period RP (S91: NO), the processor 27 proceeds to step S92. In step S92, the processor 27 permits transmission of the satisfaction notification M42. Then, the processor 27 ends this determination of whether to permit transmission of the satisfaction notification M42.

Subsequently, the vehicle manager 26 transmits the satisfaction notification M42. When the management server 70 receives the satisfaction notification M42, the management server 70 transmits the inquiry notification M41 to the second device 30B. Then, the management system 10 continues the deletion management beginning from step S65, so as to delete the subject digital key.

When the processor 27 determines that the vehicle 20 received the cancellation request D51 from the second device 30B during the specified period RP (S91: YES), the processor 27 proceeds to step S93. In step S93, the processor 27 suspends transmission of the satisfaction notification M42.

In this case, the management server 70 does not receive the satisfaction notification M42. Accordingly, the management system 10 does not generate the deletion request D42 in accordance with the satisfaction notification M42. That is, the processor 27 suspends transmission of the satisfaction notification M42, such that the management system 10 does not delete the subject digital key.

After the processor 27 suspends transmission of the satisfaction notification M42, the processor 27 proceeds to step S94. In step S94, the processor 27 transmits, to the device 30 that issued the deletion reservation request D41, a suspension notification M61 indicating that transmission of the satisfaction notification M42 has been suspended. The device 30 that issued the deletion reservation request D41 is the first device 30A. Then, the processor 27 ends this determination of whether to permit transmission of the satisfaction notification M42.

### Operation of the Second Embodiment

When the vehicle manager 26 suspends transmission of the satisfaction notification M42 in step S93 of the determination of whether to permit transmission of the satisfaction notification M42, the management server 70 does not receive the satisfaction notification M42. Accordingly, the management server 70 does not generate the deletion request D42, such that the management server 70 does not transmit the deletion request D42 to the vehicle 20. As a result, the management server 70 does not allow the vehicle 20 to delete the authentication information AT of the subject digital key. In other words, the management system 10 does not delete the subject digital key.

### Advantages of the Second Embodiment

The second embodiment has the following advantages in addition to advantages (1-1) to (1-8) of the first embodiment.

(2-1) When the cancellation request D51 is not issued, during the specified period RP, from the device 30 to which a digital key different from the subject digital key is registered, the vehicle manager 26 is configured to permit transmission of the satisfaction notification M42. This allows the management system 10 to proceed with the deletion management. As a result, the management system 10 deletes the subject digital key.

In contrast, when the cancellation request D51 is issued, during the specified period RP, from the device 30 to which a digital key different from the subject digital key is registered, the vehicle manager 26 is configured to suspend transmission of the satisfaction notification M42, so that the management server 70 does not generate or transmit the deletion request D43. As a result, the vehicle manager 26 does not delete the authentication information AT of the digital key that was registered based on the subject digital key, and the authentication information AT of the subject digital key. Accordingly, the authentication information AT of the subject digital key remains undeleted.

In this manner, when the vehicle manager 26 suspends transmission of the satisfaction notification M42 during the deletion management performed by the management system 10, the management system 10 suspends deletion of the subject digital key.

(2-2) When the vehicle manager 26 suspends transmission of the satisfaction notification M42, the vehicle manager 26 transmits the suspension notification M61 to the first device 30A that issued the deletion reservation request D41. This allows the user of the first device 30A to recognize that deletion management of the subject digital key performed by the management system 10 has been suspended after the user operated the first device 30A to transmit the deletion reservation request D41.

### Third Embodiment

A management system 10 in accordance with a third embodiment will now be described with reference to the drawings. The third embodiment mainly differs from the first embodiment in that the vehicle 20 does not determine whether to accept the deletion request D42, and that the management server 70 determines whether to generate the deletion request D42. The description hereafter will focus on the differences from the first embodiment, and the same aspects will not be described in detail.

As shown in Fig. 12, when the management server 70 receives the satisfaction notification M42, the processor 71 performs step S101. In step S101, the processor 71 determines whether the management server 70 received the cancellation request D51 from the second device 30B during the specified period RP. Step S101 is the same as step S81 of the first embodiment, and thus will not be described in detail.

When the processor 71 determines that the management server 70 did not receive the cancellation request D51 from the second device 30B (S101: NO), the processor 71 proceeds to step S102. In step S102, the processor 71 permits generation of the deletion request D42. Then, the processor 71 ends this determination of whether to generate the deletion request D42.

Subsequently, the management server 70 continues the deletion management, and transmits the generated deletion request D42 to the vehicle 20. Then, the vehicle manager 26 deletes the authentication information AT of the subject digital key in accordance with the deletion request D42. As a result, the management system 10 deletes the subject digital key.

In contrast, as shown in Fig. 12, when the management server 70 receives the cancellation request D51 from the second device 30B (S101: YES), the processor 71 proceeds to step S103.

In step S103, the processor 71 prohibits generation of the deletion request D42. In this case, the management server 70 does not generate the deletion request D42 during the deletion management. Accordingly, the vehicle 20 does not receive the deletion request D42, such that the vehicle manager 26 does not delete the authentication information AT of the subject digital key. As a result, the management system 10 does not delete the subject digital key.

### Advantages of the Third Embodiment

The management system 10 in accordance with the third embodiment has the following advantages in addition to advantages (1-1) to (1-8) of the first embodiment.

(3-1) When the cancellation request D51 is issued, the management server 70 does not generate or transmit the deletion request D42 to the vehicle 20. Since the vehicle 20 does not receive the deletion request D42, the vehicle manager 26 does not delete the subject digital key. In this manner, when the management server 70 does not transmit the deletion request D42, the subject digital key remains undeleted. Accordingly, in a case in which multiple vehicles 20 are already undergoing the deletion management, the management server 70 may only execute the series of processes shown in Fig. 12, instead of updating the vehicle managers 26 of the respective vehicles 20.

### Fourth Embodiment

A management system 10 in accordance with a fourth embodiment will now be described with reference to the drawings. The fourth embodiment mainly differs from the first embodiment in that the vehicle 20 does not determine whether to accept the deletion request D42, and that the vehicle 20 determines whether to delete the authentication information AT. The description hereafter will focus on the differences from the first embodiment, and the same aspects will not be described in detail.

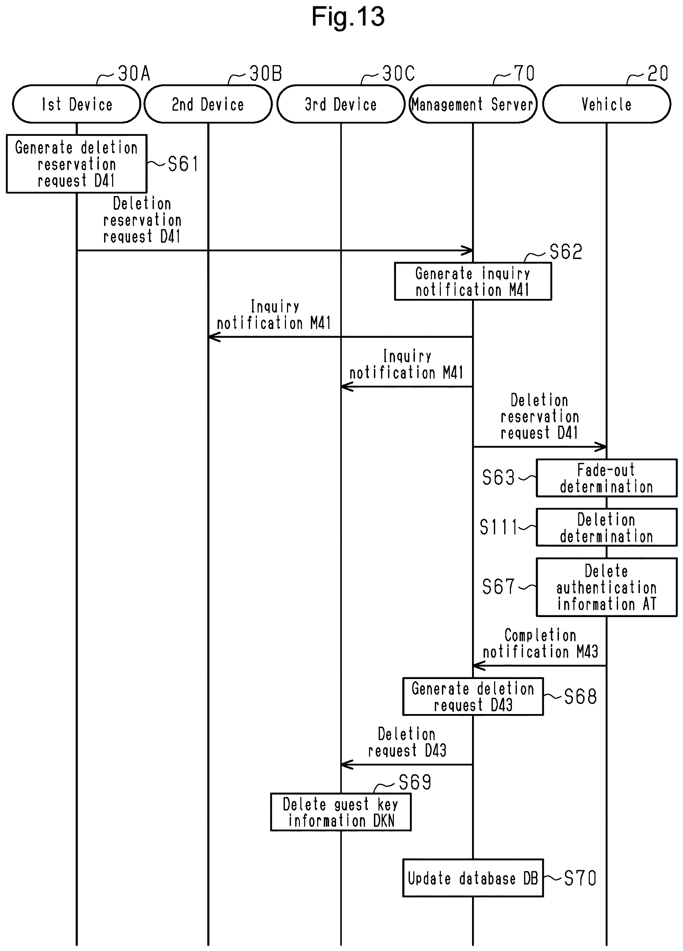

As illustrated in Fig. 13, the management system 10 performs deletion management. After the first device 30A performs step S61, the first device 30A transmits the deletion reservation request D41 to the management server 70.

After the management server 70 performs step S62, the management server 70 transmits the inquiry notification M41 to both the second device 30B and the third device 30C. Then, the management server 70 transmits the deletion reservation request D41 to the vehicle 20. When the management server 70 transmits the deletion reservation request D41 to the vehicle 20, the management server 70 also transmits information that identifies the deletion subject digital key to the vehicle 20.

When the vehicle 20 determines that the specified condition RC is satisfied in step S63, the vehicle 20 proceeds to step S111.

In step S111, the vehicle 20 determines whether to delete the authentication information AT. Details of the deletion determination of the authentication information AT will be described later. When the vehicle 20 permits deletion of the authentication information AT in step S111, the vehicle 20 proceeds to step S67. The process after step S67 is the same as that of the first embodiment, and thus will not be described in detail.

In the fourth embodiment, when the management server 70 receives the cancellation request D51 from the device 30, the management server 70 transmits, to the vehicle 20, the cancellation request D51 and information that identifies the device 30 that issued the cancellation request D51.

### Determination of Whether to Permit Deletion of Authentication Information

The determination of whether to permit deletion of the authentication information AT performed by the vehicle manager 26 will now be described in detail.

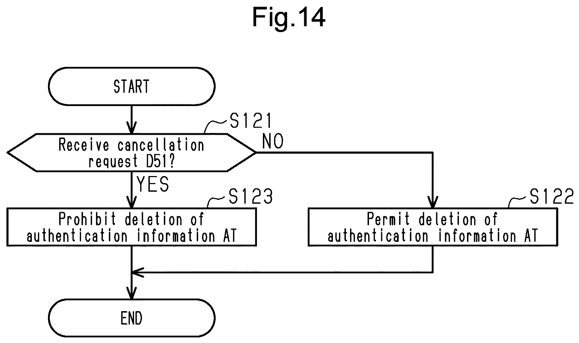

As shown in Fig. 14, when the vehicle manager 26 starts the determination of whether to delete the authentication information AT, the processor 27 performs step S121.

In step S121, the processor 27 determines whether the vehicle 20 received the cancellation request D51 during the specified period RP.

Specifically, when the specified condition RC is satisfied, the processor 27 first waits until the predetermined period P1 elapses. Next, the processor 27 determines whether the vehicle 20 received the cancellation request D51 during the specified period RP.

Then, the processor 27 refers to the information that identifies the device 30 that issued the cancellation request D51, which was received with the cancellation request D51. The processor 27 determines whether the second device 30B is identified by the reference information.

When the processor 27 determines that the vehicle 20 did not receive the cancellation request D51 from the second device 30B during the specified period RP (S121: NO), the processor 27 proceeds to step S122.

In step S122, the processor 27 permits deletion of the authentication information AT of the third digital key DK3. Then, the processor 27 ends this determination of whether to delete the authentication information AT. Subsequently, the management system 10 performs step S67 of the deletion management illustrated in Fig. 13 to delete the third digital key DK3.

In contrast, as shown in Fig. 14, when the processor 27 determines that the vehicle 20 received the cancellation request D51 from the second device 30B during the specified period RP (S121: YES), the processor 27 proceeds to step S123. In step S123, the processor 27 prohibits deletion of the authentication information AT of the third digital key DK3.

In this case, the processor 27 does not perform step S67 shown in Fig. 13. Therefore, the processor 27 does not delete the authentication information AT of the third digital key DK3, such that the management system 10 does not delete the third digital key DK3. Then, the processor 27 ends this determination of whether to delete the authentication information AT.

In the fourth embodiment, the processor 27, which is a computer, executes the vehicle program PV to perform steps S63, S111, and S67. In this manner, when the specified condition RC is satisfied, the processor 27 determines whether to delete the subject digital key. That is, the vehicle program PV is configured to, when the specified condition RC is satisfied, cause the processor 27 to determine whether to delete the subject digital key.

### Advantages of Fourth Embodiment

The management system 10 in accordance with the fourth embodiment has the following advantages in addition to advantages (1-1) to (1-8) of the first embodiment.

(4-1) When the vehicle manager 26 determines that the specified condition RC is satisfied in the fade-out determination, the vehicle manager 26 is configured to determine whether to delete the authentication information AT. When the vehicle manager 26 permits deletion of the authentication information AT, the vehicle manager 26 deletes the authentication information AT in step S67, thereby deleting the subject digital key. In contrast, if the vehicle manager 26 receives the cancellation request D51 from the second device 30B, the vehicle manager 26 is configured to not delete the authentication information AT, so that the subject digital key remains undeleted. Thus, in the fourth embodiment, after the vehicle 20 receives the deletion reservation request D41, the management server 70 may only relay the cancellation request D51 to the vehicle manager 26, so that the vehicle manager 26 determines whether to delete the subject digital key. When the vehicle manager 26 determines to delete the subject digital key, the vehicle manager 26 deletes the subject digital key. Thus, the vehicle manager 26 does not delete the third digital key DK3 if the cancellation request D51 is issued from the second device 30B during the specified period RP, and the vehicle manager 26 deletes the third digital key DK3 if the cancellation request D51 is not issued from the second device 30B during the specified period RP. In this manner, the vehicle manager 26 can manage deletion of the third digital key DK3 solely based on whether the vehicle manager 26 receives the cancellation request D51 from the second device 30B.

### Modified Examples

The above-described embodiments may be modified as described below. The above embodiments and the following modifications can be combined as long as the combined modifications remain technically consistent with each other.

### Management System

The vehicle 20 does not have to include one or more of the BLE module 23, the UWB module 24, and the NFC module 25. The vehicle 20 can perform short-range communication with the device 30 as long as the vehicle 20 includes at least one of the above modules. There is no limitation to those modules listed above, and the vehicle 20 may include any module that is configured to perform short-range communication with the device 30.

The digital keys may be authenticated by an ECU that is different from the vehicle manager 26 and installed in the vehicle 20.

The digital key-related aspects of the above embodiments do not have to be compliant with the CCC standard.

The vehicle manager 26 does not have to be a digital key ECU. The vehicle manager 26 may be, for example, a central ECU that manages multiple ECUs of the vehicle 20 in a centralized manner.

In the above embodiments, the vehicle manager 26 may have the processor 27 including one or more processors that execute various processes in accordance with computer programs (software). Furthermore, the vehicle manager 26 may have processing circuitry including one or more dedicated hardware circuits, such as an application specific integrated circuit (ASIC), that execute at least some of various processes. Alternatively, the vehicle manager 26 may have circuitry including a combination of the one or more processors and the one or more dedicated hardware circuits. The processor includes a CPU and memory, such as random-access memory (RAM), read-only memory (ROM), or the like. The memory stores program codes or instructions configured to cause the CPU to execute processes. The memory, which is a computer-readable storage medium, may include any type of media that is accessible by a general-purpose computer or a dedicated computer. The same applies to the devices 30 and the management server 70.

The device 30 is not limited to a smartphone. The device 30 may be a smart watch. The device 30 may be a predetermined server. In this case, the device 30 may be included in the predetermined server. For example, when the owner of the vehicle 20 is a rental-car service provider or a car-sharing service provider, the owner device 40 may be included in the predetermined server. Also, the friend device 51 may be included in the predetermined server.

In the above embodiments, the owner key KO, the friend key KF, and the guest key KN are ranked in the hierarchy of priority in this order, and a relatively high degree of authority is granted to a digital key having a relatively high priority level. A relatively high degree of authority does not have to be granted to a digital key having a relatively high priority level. For example, the same degree of authority may be granted to the owner key KO, the friend key KF, and the guest key KN, having three different priority levels.

As described in the above embodiments, the shareable device 50 has a functionality of receiving a shareable key KS. The device 30 having a functionality of receiving a digital key, such as the shareable device 50, may be referred to as a receiver device.

A separate device server 60 does not have to be provided for each type of device 30, as long as multiple devices 30 and the management server 70 can perform wireless communication. The device server 60 may be omitted, as long as multiple devices 30 and the management server 70 can directly perform wireless communication.

The management server 70 may include multiple servers. In an example, the management server 70 may include a server that stores the database DB and a server that executes the server program PS. In another example, the management server 70 may include a server that communicates with the vehicle 20 and a server that communicates with the device server 60. These servers may be configured to communicate with each other.

The management server 70 does not have to store the database DB. The management server 70 may only manage combinations of the key information DK of the device 30 and the authentication information AT of the vehicle manager 26 for at least one digital key included in the management system 10.

The management system 10 does not have to include the management server 70. Accordingly, the management system 10 may only be configured to initiate deletion of the subject digital key, determine whether to delete the subject digital key, and execute deletion of the subject digital key. In the first embodiment, the management server 70 initiates deletion of the subject digital key, and the vehicle manager 26 determines whether to delete the subject digital key and executes deletion of the subject digital key. However, there is no limit to such a configuration.

In an example, the vehicle manager 26 may initiate deletion of the subject digital key, determine whether to delete the subject digital key, and execute deletion of the subject digital key. In this case, the management system 10 may only include the vehicle manager 26. In another example, the management system 10 may be formed by the management server 70 and multiple devices 30. In another example, the management system 10 may be formed by the management server 70 and the vehicle manager 26.

Deleting a digital key means shifting the state of the digital key from an enabled state to a disabled state. In the above embodiments, a digital key is disabled when at least one of its corresponding authentication information AT and corresponding key information DK is deleted.

Accordingly, deleting a digital key means deleting at least one of the authentication information AT related to the digital key from the vehicle manager 26, and the key information DK related to the digital key from the device 30. When deleting both the authentication information AT and the key information DK, the digital key is deleted at a time point at which one of the authentication information AT or the key information DK is deleted first.

### Various Types of Information

The information related to a digital key stored in the vehicle manager 26 is not limited to the authentication information AT, and may include any information related to the digital key. For example, the information related to a digital key stored in the vehicle manager 26 may include information that identifies the digital key.

The information related to a digital key stored in the device 30 is not limited to the key information DK, and may include any information related to the digital key. For example, the information related to a digital key stored in the device 30 may include information that identifies the digital key.

As described in the above embodiments, the information related to a digital key stored in the vehicle manager 26 may be the same as, or differ from, the information related to the digital key stored in the device 30.

The authentication information AT is not limited to the examples described in the above embodiments, as long as the authentication information AT authenticates a digital key when the digital key is used. In an example, the authentication information AT may be a common key shared by the vehicle manager 26 and the device 30. In another example, the authentication information AT may be a common private key.

The structure of the information included in the key information DK is not limited to the examples described in the above embodiments. In an example, the owner key information DKO does not have to include the slot identification information ST4. In another example, the key information DK may include information indicating the type of digital key. The information indicating the type of digital key indicates, for example, one of the owner key KO, the friend key KF, and the guest key KN.

The database DB may include information indicating the type of device 30. The information indicating the type of device 30 indicates, for example, any one of a smartphone, a smartwatch, a predetermined server described in the above modified example, or the like.

The structure of the data block DA in the database DB is not limited to the examples described in the above embodiments. The database DB may only store information necessary for the management server 70 to perform management in the management system 10.

In the database DB, the digital keys of the same type do not have to be granted with the same degree of authority, and the degree of authority may vary between individual digital keys. Alternatively, in the database DB, no authority has to be granted to the digital keys.

### Registration of Digital Key

The series of processes for registering the owner key KO is not limited to examples described in the above embodiments. For example, the owner device 40 does not have to perform the pairing process in step S12. Instead, the owner device 40 may exchange information, such as the generation data DC, between the vehicle 20 and the first device 30A via the management server 70, and store the owner key information DKO. The series of processes for registering the owner key KO may be modified in accordance with the structure of the owner key information DKO and the structure of the authentication information AT.

The series of processes for registering the friend keys KF is not limited to the examples described in the above embodiments. For example, the management server 70 may update the database DB in step S29 after transmitting the authentication package ATP and the storage request D24 to the vehicle 20. The series of processes for registering the friend key KF may be modified in accordance with the structure of the friend key information DKF and the structure of the authentication information AT.

The series of processes for registering the guest key KN is not limited to the examples described in the above embodiments. The sequence of registration process for the guest key KN may differ from the sequence of registration process for the friend key KF. The series of processes for registering the guest key KN may be modified in accordance with the structure of the guest key information DKN and the structure of the authentication information AT.

The guest key KN does not have to be included in the type of digital key. That is, all the shareable keys KS in the management system 10 may be the friend key KF.

The guest device 52 may be configured to transmit a request for registration of a new guest key KN. In other words, the shareable device 50 may transmit a request for registration of a new guest key KN, regardless of whether the shareable device 50 is the friend device 51 or the guest device 52. In this case, the management system 10 may register the new guest key KN by performing the series of processes illustrated in Fig. 7.

The subject digital key does not have to be the second digital key DK2, which is the friend key KF. For example, when a new guest key KN is registered based on the third digital key DK3 as described in the above modified example, the subject digital key may be the third digital key DK3.

### Deletion Reservation Request

The deletion reservation request D41 does not have to be generated by the device 30. The management server 70 or the vehicle 20 may generate the deletion reservation request D41.

The device 30 may be configured to generate the deletion reservation request D41 for a digital key of which registration the device 30 was not involved in. For example, the second device 30B may generate the deletion reservation request D41 for the fifth digital key DK5.

### Specified Condition

The specified condition RC does not have to include that the vehicle 20 authenticates at least one digital key that is different from the subject digital key. For example, the specified condition RC may be that a predetermined time elapses from when the deletion reservation request D41 was received.

### Determination of Whether to Delete Subject Digital Key

Whether to delete the subject digital key is determined by, for example, determining whether to accept the deletion request D42 in the first embodiment, determining whether to permit transmission of the satisfaction notification M42 in the second embodiment, and determining whether to permit generation of the deletion request D42 in the third embodiment. However, there is no limit to such configurations described in the above embodiments. Whether to delete the subject digital key may be determined solely based on whether the cancellation request D51 is issued from the device 30 that is different from the device 30 to which the subject digital key is registered. In this case, the management system 10 may withhold deletion of the subject digital key by suspending transmission or generation of signals that are prerequisites to deletion of the subject digital key in the deletion management.

### Specified Period

The specified period RP is not limited to the examples described in the above embodiments. The specified period RP may be, for example, a period from when the management server 70 receives the deletion reservation request D41 to when the specified condition RC is satisfied. The specified period RP does not have to include a period from when the management server 70 receives the deletion reservation request D41 to when the specified condition RC is satisfied. For example, the specified period RP may be a period from when the subject digital key is registered to when the management server 70 receives the deletion reservation request D41.

### Device That Issues Cancellation Request

The management system 10 may be configured to delete the subject when the cancellation request D51 is issued, during the specified period RP, from the device 30 to which a digital key different from the subject digital key is registered, and the device 30 was not involved in the registration of subject digital key. That is, the cancellation request D51 may be issued from the device 30 that was not involved in the registration of the subject digital key. Specifically, the cancellation request D51 may be issued from not only the second device 30B but also any one of the first device 30A, and the fourth device 30D to the seventh device 30E.

The management system 10 may delete the subject digital key when the cancellation request D51 is issued, during the specified period RP, from the device 30 to which a digital key different from the subject digital key is registered, and the device 30 transmitted the deletion reservation request D41. That is, the cancellation request D51 may be issued from the first device 30A that transmitted the deletion reservation request D41.

The deletion reservation request D41 does not have to be transmitted from the device 30 that was involved in the registration of the subject digital key. The deletion reservation request D41 may be transmitted from the device 30 that was not involved in the registration of the subject digital key.

### Notifications

When the vehicle manager 26 rejects the deletion request D42, the vehicle manager 26 does not have to transmit the rejection notification M51. For example, in the first embodiment, the vehicle manager 26 does not have to perform step S84 of the determination of whether to accept the deletion request D42.

When the vehicle manager 26 suspends transmission of the satisfaction notification M42, the vehicle manager 26 does not have to transmit the suspension notification M61. For example, in the second embodiment, the vehicle manager 26 does not have to perform step S94 of the determination of whether to permit transmission of the satisfaction notification M42.

The management server 70 may transmit the inquiry notification M41 to each of the first device 30A, and the third device 30C to the seventh device 30G.

When the management server 70 receives the deletion reservation request D41, the management server 70 does not have to transmit the inquiry notification M41 to the second device 30B.

When the specified condition RC is satisfied, the management server 70 does not have to transmit the inquiry notification M41 to the second device 30B.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management system (10) configured to delete a subject digital key to a vehicle (20) when a specified condition (RC) is satisfied, the subject digital key being one of digital keys to the vehicle (20), wherein
the management system (10) is configured to not delete the subject digital key if a cancellation request (D51) for deletion of the subject digital key is issued, during a specified period (RP), from a device (30) to which a digital key different from the subject digital key is registered, and
the management system (10) is configured to delete the subject digital key if the cancellation request (D51) is not issued, during the specified period (RP), from a device (30) to which a digital key different from the subject digital key is registered.

2. The management system (10) according to claim 1, wherein the management system (10) is configured to not delete the subject digital key if the cancellation request (D51) is issued, during the specified period (RP), from a device (30) to which a digital key different from the subject digital key is registered, and the device (30) was involved in registration of the subject digital key.

3. The management system (10) according to claim 1 or 2, wherein
a request for deletion of the subject digital key when the specified condition (RC) is satisfied is referred to as a deletion reservation request (D41), and
the management system (10) is configured not to delete the subject digital key if the cancellation request (D51) is issued, during the specified period (RP), from a device (30) to which a digital key different from the subject digital key is registered, and the device (30) did not issue the deletion reservation request (D41).

4. The management system (10) according to any one of claims 1 to 3, wherein
a request for deletion of the subject digital key when the specified condition (RC) is satisfied is referred to as a deletion reservation request (D41), and
the management system (10) is configured to, if the deletion reservation request (D41) is issued from a device (30) that was involved in registration of the subject digital key, delete the subject digital key when the specified condition (RC) is satisfied.

5. The management system (10) according to any one of claims 1 to 4, wherein
a request for deletion of the subject digital key when the specified condition (RC) is satisfied is referred to as a deletion reservation request (D41),
the management system (10) comprises a management server (70) configured to manage the digital keys, and
the management server (70) is configured to, when the management server (70) receives the deletion reservation request (D41), transmit to a device (30) to which a corresponding one of the digital keys for the vehicle (20) is registered, an inquiry notification (M41) that inquires whether the cancellation request (D51) is to be issued.

6. The management system (10) according to any one of claims 1 to 5, wherein
the management system (10) comprises a management server (70) configured to manage the digital keys, and
the management server (70) is configured to, when the specified condition (RC) is satisfied, transmit to a device (30) to which a corresponding one of the digital keys for the vehicle (20) is registered, an inquiry notification (M41) that inquires whether the cancellation request (D51) is to be issued.

7. The management system (10) according to any one of claim 1 to 6, wherein the specified condition (RC) includes that the vehicle (20) authenticates at least one of the digital keys that is different from the subject digital key.

8. The management system (10) according to any one of claims 1 to 7, wherein
a request for deletion of the subject digital key when the specified condition (RC) is satisfied is referred to as a deletion reservation request (D41),
the management system (10) comprises a management server (70) configured to manage the digital keys, and
the specified period (RP) includes a period from when the management server (70) receives the deletion reservation request (D41) to when the specified condition (RC) is satisfied.

9. The management system (10) according to any one of claims 1 to 8, comprising:
a management server (70) configured to manage the digital keys; and
a vehicle manager (26) installed in the vehicle (20) and configured to store information (AT) related to the subject digital key, wherein
the management server (70) is configured to, when the specified condition (RC) is satisfied, transmit to the vehicle (20), a deletion request (D42) for the information (AT) related to the subject digital key, and
the vehicle manager (26) is configured to, when the vehicle (20) receives the deletion request (D42), reject the deletion request (D42) in response to the cancellation request (D51), so that the subject digital key remains undeleted.

10. The management system (10) according to claim 9, wherein
a request for deletion of the subject digital key when the specified condition (RC) is satisfied is referred to as a deletion reservation request (D41), and
the vehicle manager (26) is configured to, when the vehicle manager (26) rejects the deletion request (D42), transmit to a device (30) that transmitted the deletion reservation request (D41), a rejection notification (M51) indicating that the deletion request (D42) has been rejected.

11. The management system (10) according to any one of claims 1 to 8, comprising:
a management server (70) configured to manage the digital keys; and
a vehicle manager (26) installed in the vehicle (20) and configured to store information (AT) related to the subject digital key, wherein
the vehicle manager (26) is configured to, when the specified condition (RC) is satisfied, transmit to the management server (70), a satisfaction notification (M42) indicating that the specified condition (RC) has been satisfied,
the management server (70) is configured to, when the management server (70) receives the satisfaction notification (M42), transmit to the vehicle (20), a deletion request (D42) for the information (AT) related to the subject digital key,
the vehicle manager (26) is configured to, when the vehicle (20) receives the deletion request (D42), accept the deletion request (D42), so that the subject digital key is deleted, and
the vehicle manager (26) is configured to, when the cancellation request (D51) is issued, suspend transmission of the satisfaction notification (M42) to the management server (70), so that the subject digital key remains undeleted.

12. The management system (10) according to claim 11, wherein
a request for deletion of the subject digital key when the specified condition (RC) is satisfied is referred to as a deletion reservation request (D41), and
the vehicle manager (26) is configured to, when the vehicle manager (26) suspends transmission of the satisfaction notification (M42) to the management server (70), transmit to a device (30) that transmitted the deletion reservation request (D41), a suspension notification (M61) indicating that transmission of the satisfaction notification (M42) has been suspended.

13. The management system (10) according to any one of claims 1 to 8, comprising:
a management server (70) configured to manage the digital keys; and
a vehicle manager (26) installed in the vehicle (20) and configured to store information (AT) related to the subject digital key, wherein
the management server (70) is configured to, when the specified condition (RC) is satisfied, transmit to the vehicle (20), a deletion request (D42) for the information (AT) related to the subject digital key,
the vehicle manager (26) is configured to, when the vehicle (20) receives the deletion request (D42), delete the information (AT) related to the subject digital key, so that the subject digital key is deleted, and
the management server (70) is configured to, when the cancellation request (D51) is issued, not transmit the deletion request (D42) to the vehicle manager (26), so that the subject digital key remains undeleted.

14. A vehicle manager (26) installed in a vehicle (20) and being configured to delete a subject digital key to the vehicle (20) when a specified condition (RC) is satisfied, the subject digital key being one of digital keys enabled for the vehicle (20), wherein
the vehicle manager (26) is configured to not delete the subject digital key if a cancellation request (D51) for deletion of the subject digital key is issued, during a specified period (RP), from a device (30) to which a digital key different from the subject digital key is registered, and
the vehicle manager (26) is configured to delete the subject digital key if the cancellation request (D51) is not issued from the device (30) during the specified period.

15. A deletion management method for deleting a subject digital key to a vehicle (20) when a specified condition (RC) is satisfied, the method being performed by a management system (10) including a computer, the subject digital key being one of digital keys to the vehicle (20), the method comprising:
maintaining the subject digital key, if a cancellation request (D51) for deletion of the subject digital key is issued, during a specified period (RP), from a device (30) to which a digital key different from the subject digital key is registered; and
deleting the subject digital key, if the cancellation request (D51) is not issued from the device (30) during the specified period.

16. A program (PV) executable by a computer to delete a subject digital key to a vehicle (20) when a specified condition (RC) is satisfied, the subject digital key being one of digital keys to the vehicle (20), the program (PV) being configured to:
cause the computer to not delete the subject digital key, if a cancellation request (D51) for deletion of the subject digital key is issued, during a specified period (RP), from a device (30) to which a digital key different from the subject digital key is registered; and
cause the computer to delete the subject digital key, if the cancellation request (D51) is not issued, during the specified period (RP), from a device (30) to which a digital key different from the subject digital key is registered.
